# EUROPÄISCHE PATENTANMELDUNG

(11) **EP 1 280 321 A1**
(43) Veröffentlichungstag der Anmeldung: **29.01.2003**
(21) Anmeldenummer: 02015732.7
(22) Anmeldetag: 13.07.2002
(51) Int. Cl.: H04M 1/2745

(54) **Verfahren und Vorrichtung zum übernehmen einer Teilnehmerinformation aus einer graphischen Ausgabeeinrichtung**

(30) Priorität: 24.07.2001 DE 10135967
(71) Anmelder: Tenovis GmbH & Co. KG, 60326 Frankfurt am Main (DE)
(72) Erfinder: Dehler, Arne-Steffen, 74321 Bietigheim-Bissingen (DE); Polzer, Peter, 71732 Tamm (DE)
(74) Vertreter: Patentanwaltskanzlei WILHELM & BECK

(57) **Zusammenfassung**

Verfahren und Vorrichtung zum Übernehmen einer Teilnehmerinformation aus einer graphischen Ausgabeeinrichtung

Die Erfindung betrifft ein Verfahren und eine Vorrichtung zum Übernehmen einer Teilnehmerinformation aus einer grafischen Ausgabeeinrichtung (4) einer Datenverarbeitungseinheit (1, 2, 3, 4). Das Verfahren umfasst die Schritte des Markierens eines Inhaltsbereichs auf der Ausgabeeinrichtung (4), des Ermittelns der Teilnehmerinformation, des Übertragens der ermittelten Teilnehmerinformation an eine Telefoniesteuerungsschnittstelle (6), des Übernehmens der ermittelten Teilnehmerinformation von der Telefoniesteuerungsschnittstelle (6) und des Anwählens eines Teilnehmers mit Hilfe der ermittelten Teilnehmerinformation. Die erfindungsgemäße Vorrichtung umfasst eine Datenverarbeitungseinheit (1,2,3,4), die ein Eingabegerät (2,3) und eine Ausgabeeinrichtung (4) zum Darstellen einer Information aufweist und die so gestaltet ist, um mehrere Anwendungsprogramme zu betreiben, eine Telefoniesteuerungsschnittstelle (6) und ein Telekommunikations-Endgerät (7) zum Bereitstellen einer Verbindung zu einer Telekommunikationseinrichtung. Die Datenverarbeitungseinheit (1,2,3,4) ermittelt eine Teilnehmerinformation aus dem markierten Inhaltsbereich und überträgt die ermittelte Teilnehmerinformation an die Telefoniesteuerungsschnittstelle (6), Die Telefoniesteuerungsschnittstelle (6) kann die ermittelte Teilnehmerinformation übernehmen und steuert das Telekommunikations-Endgerät (7) so an, um die Telekommunikationseinrichtung mit Hilfe der ermittelten Teilnehmerinformation anzuwählen.

## Beschreibung

Die Erfindung betrifft ein Verfahren und eine Vorrichtung zum Übernehmen einer Teilnehmerinformation aus einer graphischen Ausgabeeinrichtung einer Datenverarbeitungseinheit.

Die computerunterstützte Steuerung von Telefonen aus graphischen Benutzeroberflächen basiert heute entweder auf einer speziell für diesen Zweck erzeugten Software oder auf in anderer Software integrierten Prozessen, die die Steuerungsaufgaben übernehmen. Beide Verfahren betreffen das jeweilige Programm und setzen ein Programm voraus, das in einer speziellen Betriebssystemumgebung lauffähig ist.

Einem Benutzer, der verschiedene Programme auf einer graphischen Benutzeroberfläche nutzen will, ist es somit nicht möglich, aus jedem beliebigen Programm heraus Teilnehmerinformationen zu ermitteln und zum Herstellen einer Teilnehmerverbindung zu nutzen.

Aus der Druckschrift WO 98/56159 ist ein Verfahren und eine Vorrichtung zum Erkennen von Telefonnummern aus einer Webseite bekannt. Dazu wird ein HTML-Code geprüft und erkannte Telefonnummern mit einem Icon versehen. Diese Nummer dient dann dazu, über ein internetfähiges Telefon eine Verbindung herzustellen.

Es ist daher Aufgabe der vorliegenden Erfindung, ein Verfahren zur Verfügung zu stellen, mit dem ein Benutzer Angaben von einer graphischen Benutzeroberfläche zum Herstellen einer Telefonverbindung mit einem Teilnehmer entsprechend der Angaben nutzen kann.

Diese Aufgabe wird durch das Verfahren nach Anspruch 1 sowie durch die Vorrichtung nach Anspruch 9 gelöst. Weitere vorteilhafte Ausgestaltungen der Erfindung sind in den abhängigen Ansprüchen angegeben.

Erfindungsgemäß ist ein Verfahren zum Übernehmen einer Teilnehmerinformation aus einer graphischen Ausgabeeinrichtung einer Datenverarbeitungseinheit vorgesehen. Dabei wird zunächst ein Inhaltsbereich auf der Ausgabeeinrichtung markiert. Die Angaben in dem markierten Inhaltsbereich werden verarbeitet, z.B. gemäß einem Algorithmus und die Teilnehmerinformation ermittelt. Die ermittelte Teilnehmerinformation wird anschließend an eine Telefoniesteuerungsschnittstelle übertragen, von wo die Teilnehmerinformation zum Anwählen eines Teilnehmers genutzt werden kann.

Das erfindungsgemäße Verfahren ermöglicht es dem Benutzer, einen Textbereich, der auf beliebige Art und durch eine beliebige Anwendung auf der Ausgabeeinrichtung dargestellt wird, zu selektieren und einer Telefoniesteuerungsschnittstelle zu übergeben. Dazu wird aus dem Textbereich die Teilnehmerinformation ermittelt, so dass z.B. ein Telefon einen entsprechenden Wählvorgang durchführen kann.

Der Vorteil dieser Erfindung liegt darin, dass unabhängig von den Grenzen eines jeweiligen Programms, das auf der Datenverarbeitungseinheit ausgeführt wird, ein Inhaltsbereich mit einer Information selektiert werden kann, die anschließend zum Steuern eines zugeordneten Telefons verwendet wird. Somit ist der Benutzer einer Datenverarbeitungseinheit mit einer graphischen Ausgabeeinrichtung nicht auf speziell implementierte Funktionen in betriebenen Anwendungsprogrammen angewiesen, um über die graphische Ausgabeeinrichtung eine Telefonverbindung aufzubauen. Insbesondere werden Arbeitsabläufe des Benutzers individuell besser abgebildet.

Es kann weiterhin vorgesehen sein, dass das Markieren des Inhaltsbereichs mit Hilfe eines Eingabegerätes, insbesondere einer Computermaus, durchgeführt wird.

Die Teilnehmerinformation, die aus dem markierten Inhaltsbereich ermittelt wird, kann vorzugsweise eine Rufnummer sein, mit der ein Teilnehmer angewendet werden kann. Die Teilnehmerinformation kann ebenfalls eine Information darstellen, die mit Hilfe einer Zuordnungsfunktion, z.B. einer Tabelle, einer Rufnummer zugeordnet werden kann. Die Teilnehmerinformation kann dann beispielsweise in einem Namen einer Person, eines Unternehmens o.ä. bestehen.

Es kann weiterhin vorgesehen sein, dass das Ermitteln der Teilnehmerinformation mit Hilfe eines Texterkennungsverfahrens durchgeführt wird. Bei dem Texterkennungsverfahren wird eine Zeichenkette ermittelt, in der die Teilnehmerinformation enthalten ist. Je nach verwendetem Programm, das auf der Datenverarbeitungseinheit betrieben wird, wird die graphische Ausgabe auf unterschiedliche Weise auf der graphischen Ausgabeeinrichtung dargestellt. So kann die Teilnehmerinformation beispielsweise aus ASCII-Informationen bestehen, so dass eine Umwandlung der Zeichen in dem markierten Inhaltsbereich entfällt. Handelt es sich bei den ausgegebenen Zeichen um eine graphische Darstellung, so müssen die Zeichen innerhalb des markierten Inhaltsbereichs mit Hilfe eines Erkennungsverfahrens in Zeichen, z.B. ASCII-Zeichen, umgewandelt werden, um die Teilnehmerinformation zu erhalten.

Bei dem Ermitteln der Teilnehmerinformation aus der entweder direkt oder nach der Durchführung einer Texterkennung erfassten Zeichenkette wird die Zeichenkette in eine Teilnehmerinformation umgewandelt, indem man Buchstaben und/oder nicht wählbare Sonderzeichen herausfiltert, Leerzeichen wegnimmt und/oder bestimmte Nummernteile zu der Zeichenkette hinzufügt, wie z.B. Vorwahlen, Landeskennung und Nachwahlen, um so die Teilnehmerinformation zu erhalten. Auf diese Weise kann eine Zeichenkette so aufbereitet werden, dass man eine Teilnehmerinformation erhält, die an z.B. ein Telefon übergeben werden kann, so dass dort die ermittelte Teilnehmerinformation zum Anwählen eines Teilnehmers verwendet werden kann.

Das Verfahren wird vorzugsweise als Programmanweisung ausgeführt, die in der Datenverarbeitungseinheit betrieben wird. Um eine Verwendung des Verfahrens in allen Anwendungsprogrammen zu gewährleisten ist die Programmanweisung von einem Anwenderprogramm getrennt ausgeführt, so dass das Verfahren mit unterschiedlichen Anwendungsprogrammen verwendet werden kann.

Gemäß einem weiteren Aspekt der vorliegenden Erfindung ist eine Vorrichtung zum Übernehmen einer Teilnehmerinformation vorgesehen. Die Vorrichtung weist eine Datenverarbeitungseinheit, die ein Eingabegerät und eine Ausgabeeinrichtung zum Darstellen einer Information in einem Inhaltsbereich umfasst, und die weiterhin so gestaltet ist, um mehrere Anwendungsprogramme zu betreiben. Die Vorrichtung umfasst weiterhin eine Telefoniesteuerungsschnittstelle und ein Telekommunikations-Endgerät zum Bereitstellen einer Verbindung zu einer Telekommunikationseinrichtung auf. Mit dem Eingabegerät kann der Inhaltsbereich auf der Ausgabeeinrichtung ausgewählt werden. Die Datenverarbeitungseinheit ist so ausgeführt, um die Teilnehmerinformation aus dem markierten Inhaltsbereich zu ermitteln und die ermittelte Teilnehmerinformation an die Telefoniesteuerungsschnittstelle zu übertragen. Mit Hilfe der Telefoniesteuerungsschnittstelle kann die ermittelte Teilnehmerinformation übernommen werden. Anschließend steuert die Telefoniesteuerungsschnittstelle das Telekommunikations-Endgerät so an, um die Telekommunikationseinrichtung mit Hilfe der ermittelten Teilnehmerinformation anzuwählen.

Dies hat den Vorteil, dass unabhängig von dem auf der Datenverarbeitungseinheit betriebenen Anwendungsprogramm oder Anwendungsprogrammen die auf der Ausgabeeinrichtung dargestellte Information erfasst und anschließend in eine Teilnehmerinformation umgewandelt werden kann. Auf diese Weise kann mit Hilfe von in nahezu beliebiger Weise auf der Ausgabeeinrichtung dargestellter Information eine Telefonverbindung über ein Telekommunikations-Endgerät zu einer Telekommunikationseinrichtung hergestellt werden.

Dazu ist vorzugsweise die Datenverarbeitungseinheit so ausgeführt ist, um den ausgewählten Inhaltsbereich mit Hilfe eines Texterkennungsverfahrens zu verarbeiten, um eine Zeichen-Information zu erhalten. Auf diese Weise können auch nicht z.B. in ASCII-Code dargestellte Information in verwendbare Teilnehmerinformation umgewandelt werden. So kann z.B. eine grafische Ausgabe auf der Ausgabeeinrichtung einem Texterkennungsverfahren zugeführt werden, das eine Zeichen-Information generiert, die in z.B. der Teilnehmerinformation entsprechen kann oder der Teilnehmerinformation gemäß einer Zuordnungsvorschrift zugeordnet werden kann.

Vorzugsweise kann der ausgewählte Inhaltsbereich der Teilnehmerinformation auch direkt zugeordnet werden.

Eine bevorzugte Ausführungsform der Erfindung ist im Folgenden anhand der beigefügten Zeichnung näher erläutert. Es zeigen:
Fig. 1 eine Ausführungsform der erfindungsgemäßen Vorrichtung; und
Fig. 2 ein Ablaufdiagramm einer Ausführungsform des erfindungsgemäßen Verfahrens.

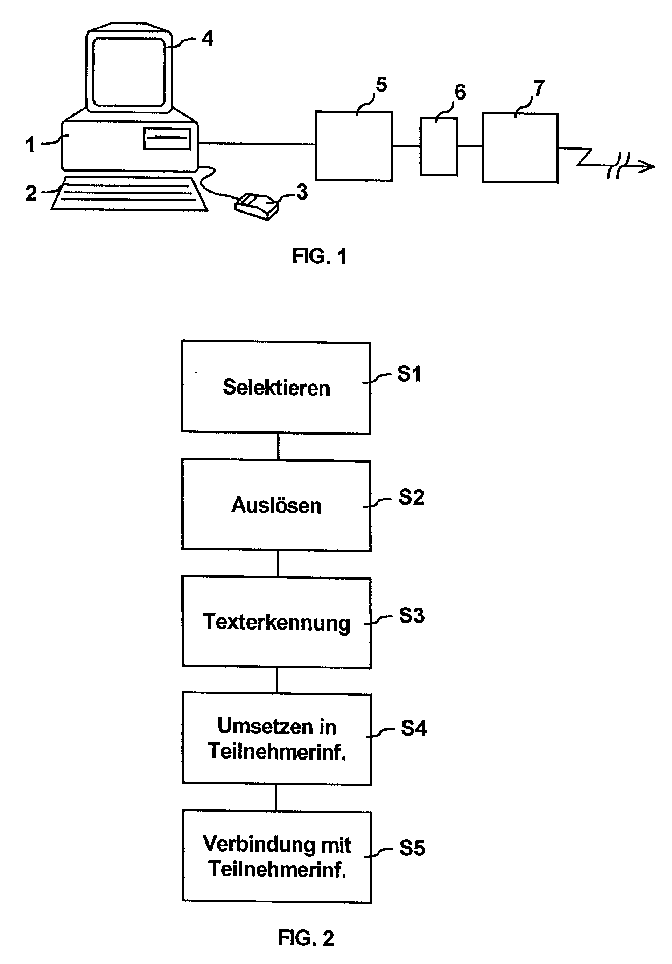

In Fig. 1 ist eine erfindungsgemäße Vorrichtung dargestellt, mit einer Datenverarbeitungseinheit 1, an die eine Tastatur 2 und eine Computermaus 3 angeschlossen ist. Die Datenverarbeitungseinheit weist weiterhin eine Ausgabeeinrichtung 4 auf, auf der Informationen dargestellt werden können. Mit Hilfe der Computermaus 3 kann ein Inhaltsbereich selektiert werden.

Durch einen Auslösevorgang oder automatisch wird der markierte Inhaltsbereich einer Umwandlungseinheit 5 zur Verfügung gestellt. Die Umwandlungseinheit 5 übernimmt das Ermitteln der Teilnehmerinformation aus dem markierten Inhaltsbereich mit Hilfe einer Texterkennung und/oder mit Hilfe von syntaktischen Regeln, die in Verbindung mit dem erfindungsgemäßen Verfahren näher beschrieben werden. Ebenso stellt die Umwandlungseinheit 5 eine Zuordnungsfunktion, z.B. eine Tabelle, zur Verfügung, wobei der aus dem graphischen Inhaltsbereich ermittelten Zeichenkette eine Teilnehmerinformation zugeordnet werden kann, wenn es sich dabei nicht um eine Rufnummer handelt. Die Umwandlungseinheit 5 ist getrennt von der Datenverarbeitungseinrichtung dargestellt. Sie kann jedoch auch in der Datenverarbeitungseinrichtung 1 integriert sein. Dort kann sie als Hardware oder als Programmanweisung implementiert sein.

Die in der Umwandlungseinheit 5 ermittelte Teilnehmerinformation wird an eine T Telefoniesteuerungsschnittstelle 6 übertragen. Die Telefoniesteuerungsschnittstelle 6 ist mit einem Telekommunikations-Endgerät 7, z.B. einem Telefon, verbunden, in dem das Anwählen eines Teilnehmers gemäß der ermittelten Teilnehmerinformation durchgeführt wird. Das Anwählen wird durch die Telefoniesteuerungsschnittstelle 6 angewiesen bzw. gesteuert.

Die Figur 2 zeigt ein Ablaufdiagramm einer bevorzugten Ausführungsform des erfindungsgemäßen Verfahrens. Es zeigt insbesondere das Ablaufdiagramm eines Computerprogramms, das das erfindungsgemäße Verfahren in einer Datenverarbeitungseinheit implementiert. Das Computerprogramm läuft im wesentlichen neben einem oder mehreren Anwendungsprogrammen, mit denen ein Benutzer arbeitet.

Das Verfahren wird anhand des Computerprogramms und einem Betriebssystem, das in der Datenverarbeitungseinheit betrieben wird, in Verbindung mit der bevorzugten Ausführungsform der erfindungsgemäßen Vorrichtung erläutert.

Über das Eingabegerät 3 (z.B. eine Computermaus) wird auf der Ausgabeeinrichtung, z.B. ein Computer-Monitor, ein Inhaltsbereich selektiert (Schritt S1), in dem sich eine Information, die der Teilnehmerinformation entspricht oder dieser zugeordnet werden kann, dargestellt ist. Die Teilnehmerinformation kann durch Schrift, z.B. in ASCII-Zeichen-Form, oder durch eine grafische Abbildung dargestellt sein. Das Selektieren des Inhaltsbereichs kann über das Einrahmen eines grafischen Bereichs oder durch Doppelklick auf die dargestellte Information erfolgen, wobei bei letzterem die Datenverarbeitungseinheit 1 den Umfang des Inhaltsbereich selbstständig ermittelt. Damit z.B. nach einem Auslösebefehl, z.B. bei einem Doppel-Klick, die gesamte Rufnummer erkannt werden kann, muss demnach ein Algorithmus vorgesehen sein, der die Größe der Rufnummer auf der graphischen Ausgabeeinrichtung erfasst und anschließend selektiert. Ebenso kann das Selektieren über das Verwenden von anderen Eingabemedien und über entsprechende Mechanismen, z.B. über Tastenkombination an der Tastatur 2 erfolgen. Je nach den graphischen Fähigkeiten der Ausgabeeinrichtung wird der markierte Inhaltsbereich abgehoben gekennzeichnet, z.B. durch eine Invertierung des Inhaltsbereichs bzw. durch eine Umrandung des Inhaltsbereichs.

Nach dem Beenden des Markiervorgangs wird entweder automatisch oder durch eine Auslöseprozedur das Ermitteln der Teilnehmerinformation aus dem markierten Inhaltsbereich durchgeführt. Die Auslöseprozedur kann beispielsweise in dem Eingeben einer festgelegten Tastenkombination, Bedienung der rechten Maustaste oder einer Kombination beider Möglichkeiten, durch Bedienen einer Funktionstaste, einem Doppelklick auf eine der Computermaus-Tasten usw. bestehen (Schritt S2).

Nach dem Starten des Ermittelns der Teilnehmerinformation wird der selektierte, graphische Inhaltsbereich einer Texterkennungsroutine zugeführt (Schritt S3). Die Texterkennung führt eine Zeichenerkennung bzw. ein OCR-Verfahren durch, so dass die in dem Inhaltsbereich dargestellten Zeichen in eine Zeichenkette, z.B. in einem ASCII-Code, umgewandelt werden. Die Zeichenkette beinhaltet alle Zeichen in derselben Reihenfolge, wie sie in dem graphischen Inhaltsbereich angezeigt wurden.

Die Zeichenkette wird nun in eine von einem Endgerät wählbare Teilnehmerinformation umgesetzt (Schritt S4). Dies kann einerseits mit syntaktischen Regeln erfolgen. Dazu können Buchstaben und nicht wählbare Sonderzeichen herausgefiltert werden, Leerzeichen weggenommen werden und auch evtl. vorkonfigurierte Vor- oder Nachwahlen angehängt werden, wie z.B. eine Amtskennziffer.

Andererseits ist es ebenso möglich, dass die Zeichenkette als Suchmuster für eine Datenbankabfrage benutzt wird, über die die zu wählende Teilnehmerinformation ermittelt wird. Wird beispielsweise anstatt einer Rufnummer als Teilnehmerinformation ein Name selektiert und dieser einer Adressdatenbank übergeben, wird diesem Namen als Teilnehmerinformation die Rufnummer zugeordnet und dann dem Telekommunikations-Endgerät 7 zur Verfügung gestellt.

Die so ermittelte Teilnehmerinformation wird dem Telekommunikations-Endgerät 7 so zur Verfügung gestellt, indem es zunächst an eine Telefoniesteuerungsschnittstelle übertragen wird, die das Anwählen eines Teilnehmers mit Hilfe der ermittelten Teilnehmerinformation entweder in einem angeschlossenen Telefon oder über eine sonstige Wählvorrichtung durchführt, z.B. durch Initiieren des Wählvorgangs oder durch Steuern des Wählvorgangs (Schritt S5).

Die in der vorangehenden Beschreibung, den Ansprüchen und den Zeichnungen offenbarten Merkmale der Erfindung können sowohl einzeln als auch in beliebiger Kombination zur Verwirklichung der Erfindung in ihren verschiedenen Ausführungsformen wesentlich sein.

### Bezugszeichenliste

- 1: Datenverarbeitungseinheit
- 2: Tastatur
- 3: Computermaus
- 4: Ausgabeeinrichtung
- 5: Umwandlungseinheit
- 6: Telefoniesteuerungsschnittstelle
- 7: Telekommunikations-Endgerät

## Patentansprüche

1. Verfahren zum Übernehmen einer Teilnehmerinformation aus einer grafischen Ausgabeeinrichtung einer Datenverarbeitungseinheit (1,2,3,4) mit folgenden Schritten:
Markieren eines Inhaltsbereichs auf der Ausgabeeinrichtung (4);
Ermitteln der Teilnehmerinformation aus dem markierten Inhaltsbereich;
Übertragen der ermittelten Teilnehmerinformation an eine Telefoniesteuerungsschnittstelle (6);
Übernehmen der ermittelten Teilnehmerinformation von der Telefoniesteuerungsschnittstelle (6);
Anwählen eines Teilnehmers mit Hilfe der ermittelten Teilnehmerinformation.

2. Verfahren nach Anspruch 1, wobei das Markieren des Inhaltsbereiches mit Hilfe eines Eingabegerätes (2, 3), insbesondere einer Computermaus, durchgeführt wird.

3. Verfahren nach Anspruch 1 oder 2, wobei die Teilnehmerinformation eine Rufnummer ist.

4. Verfahren nach Anspruch 1 oder 2, wobei die Teilnehmerinformation einer Rufnummer zugeordnet wird.

5. Verfahren nach einem der Ansprüche 1 bis 4, wobei das Ermitteln der Teilnehmerinformation mit Hilfe eines Texterkennungsverfahrens durchgeführt wird, bei dem eine Zeichenkette ermittelt wird, in der die Teilnehmerinformation enthalten ist.

6. Verfahren nach Anspruch 5, wobei das Ermitteln der Teilnehmerinformation aus der Zeichenkette weiterhin mindestens einen der Schritte des Herausfilterns von Buchstaben und/oder nicht wählbaren Sonderzeichen, des Wegnehmens von Leerzeichen und/oder des Hinzufügens von Nummerteilen zu der Zeichenkette umfasst, um die Teilnehmerinformation zu erhalten.

7. Verfahren nach einem der Ansprüche 1 bis 6, wobei das Verfahren als Programmanweisung in der Datenverarbeitungseinheit betrieben wird.

8. Verfahren nach einem der Ansprüche 1 bis 7, wobei die Programmanweisung von einem Anwenderprogramm getrennt ausgeführt ist, so dass das Verfahren mit unterschiedlichen Anwendungsprogrammen verwendet werden kann.

9. Vorrichtung zum Übernehmen einer Teilnehmerinformation mit einer Datenverarbeitungseinheit (1,2,3,4), die ein Eingabegerät (2,3) und eine Ausgabeeinrichtung (4) zum Darstellen einer Information in einem Inhaltsbereich aufweist und die so gestaltet ist, um mehrere Anwendungsprogramme zu betreiben, mit einer Telefoniesteuerungsschnittstelle (6) und mit einem Telekommunikations-Endgerät (7) zum Bereitstellen einer Verbindung zu einer Telekommunikationseinrichtung, wobei das Eingabegerät so ausgestaltet ist, um den Inhaltsbereich auf der Ausgabeeinrichtung auszuwählen, wobei die Datenverarbeitungseinheit (1,2,3,4) so ausgeführt ist, um die Teilnehmerinformation aus dem markierten Inhaltsbereich zu ermitteln und die ermittelte Teilnehmerinformation an die Telefoniesteuerungsschnittstelle (6) zu übertragen, wobei die Telefoniesteuerungsschnittstelle (6) so ausgeführt ist, um die ermittelte Teilnehmerinformation zu übernehmen und das Telekommunikations-Endgerät (7) so anzusteuern, um die Telekommunikationseinrichtung mit Hilfe der ermittelten Teilnehmerinformation anzuwählen.

10. Vorrichtung nach Anspruch 9, wobei die Datenverarbeitungseinheit (1,2,3,4) so ausgeführt ist, um den ausgewählten Inhaltsbereich mit Hilfe eines Texterkennungsverfahrens zu verarbeiten, um eine Zeichen-Information zu erhalten.

11. Vorrichtung nach Anspruch 10, wobei die Zeichen-Information der Teilnehmerinformation entspricht.

12. Vorrichtung nach Anspruch 10, wobei die Datenverarbeitungseinheit (1,2,3,4) so ausgeführt ist, um die Zeichen-Information der Teilnehmerinformation gemäß einer Zuordnungsvorschrift zuzuordnen.

13. Vorrichtung nach Anspruch 9 oder 10, wobei die Datenverarbeitungseinheit (1,2,3,4) so ausgeführt ist, um den ausgewählten Inhaltsbereich der Teilnehmerinformation zuzuordnen.
